# EUROPÄISCHE PATENTSCHRIFT

(11) **EP 1 513 312 B1**
(45) Veröffentlichungstag und Bekanntmachung des Hinweises auf die Patenterteilung: **15.02.2006**
(21) Anmeldenummer: 03019920.2
(22) Anmeldetag: 02.09.2003
(51) Int. Cl.: H04L 29/06

(54) **Multimediale Videotelephonie**
Multimedia Videotelephony
Téléphonie Vidéo multimédia

(43) Veröffentlichungstag der Anmeldung: 09.03.2005
(73) Patentinhaber: SIEMENS AKTIENGESELLSCHAFT, 80333 München (DE)
(72) Erfinder: Schmidt, Helmut, Dr., 93049 Regensburg (DE)

(56) Entgegenhaltungen:
- EP-A- 1 047 241
- WO-A-02/089415

## Beschreibung

In der Vergangenheit haben sich zwei wesentliche Typen von Kommunikationsnetzen zur Übermittlung von Informationen herausgebildet: Paketorientierte (Daten-) Netze und leitungsorientierte (Sprach-) Netze. Im Zuge der Konvergenz dieser beiden Netztypen haben sich konvergente Multimedianetze herausgebildet. Durch Zusammenschluss dieser unterschiedlichen Netztypen entstehen hybride Netze.

Leitungsorientierte Netze - auch Sprachnetze, Telephonnetze oder Public Switched Telephone Network (PSTN) genannt - sind auf die Übermittlung von in der Fachwelt auch als (Sprech-) Verbindung, Gespräch oder Call bezeichneten kontinuierlich strömenden (Sprach-) Informationen ausgelegt. Die Übermittlung der Informationen erfolgt hierbei üblicherweise mit hoher Dienstgüte und Sicherheit. Beispielsweise ist für Sprache eine minimale - z.B. < 200 ms - Verzögerung (Delay) ohne Schwankungen der Verzögerungszeit (Delay-Jitter) wichtig, da Sprache bei Wiedergabe im Empfangsgerät einen kontinuierlichen Informationsfluss erfordert. Ein Informationsverlust kann deshalb nicht durch ein nochmaliges Übermitteln der nicht übermittelten Information ausgeglichen werden und führt im Empfangsgerät üblicherweise zu akustisch wahrnehmbaren Störungen (z.B. Knacksen, Verzerrung, Echo, Stille). In der Fachwelt wird die Übermittlung von Sprache verallgemeinert auch als Echtzeit-(Übermittlungs-)Dienst bzw. als Realtime-Service bezeichnet.

Paketorientierte Netze - auch Datennetze genannt - sind auf die Übermittlung von in der Fachwelt auch als Datenpaketströme, Session oder Flow bezeichneten Paketströmen ausgelegt. Hierbei muss üblicherweise keine hohe Dienstgüte garantiert werden. Ohne garantierte Dienstgüte erfolgt die Übermittlung der Datenpaketströme z.B. mit zeitlich schwankenden Verzögerungen, da die einzelnen Datenpakete der Datenpaketströme üblicherweise in der Reihenfolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als Non-Realtime-Service bezeichnet.

Die Pakete unterscheiden sich üblicherweise je nach Art des paketorientierten Netzes. Sie können beispielsweise als Internet, X.25 oder Frame Relay Pakete, aber auch als ATM Zellen ausgebildet sein. Sie werden zuweilen auch als Nachrichten bezeichnet, v.a. dann, wenn eine Nachricht in einem Paket übermittelt wird.

Ein bekanntes Datennetz ist das Internet. Dieses wird wegen des dort zum Einsatz kommenden Internet Protokolls IP zuweilen auch IP Netz genannt, wobei dieser Begriff grundsätzlich weit zu verstehen ist und alle Netze umfasst, in denen das IP Protokoll eingesetzt wird. Das Internet ist als offenes (Weitverkehrs-) Datennetz mit offenen Schnittstellen zur Verbindung von (zumeist lokalen und regionalen) Datennetzen unterschiedlicher Hersteller konzipiert. Es stellt eine vom Hersteller unabhängige Transportplattform zur Verfügung.

Verbindungen (Connections) sind Kommunikationsbeziehungen zwischen zumindest zwei Teilnehmern zum Zweck einer - zumeist gegenseitigen, d.h. bi-direktionalen - Informationsübermittlung. Der die Verbindung initiierende Teilnehmer wird üblicherweise als 'A-Teilnehmer' bezeichnet. Ein durch eine Verbindung mit einem A-Teilnehmer in Verbindung gesetzter Teilnehmer heißt 'B-Teilnehmer'. In einem verbindungslosen Netz repräsentieren Verbindungen zumindest die auf logisch abstrakter Ebene eindeutige Beziehung zwischen A- und B-Teilnehmer, d.h. entsprechend dieser Sichtweise stellen z.B. die verbindungslosen Flows im Internet logisch abstrahierte Verbindungen dar (z.B. A-Teilnehmer = Browser und B-Teilnehmer = Web Server). In einem verbindungsorientierten Netz repräsentieren Verbindungen zudem auf physikalischer Ebene eindeutige Wege durch das Netz, entlang denen die Informationen übermittelt werden.

Signalisierung dient lediglich zur Abstimmung von Netzkomponenten untereinander, jedoch nicht zur "eigentlichen" Informationsübermittlung im obigen Sinne. Die zur Signalisierung übermittelten Informationen werden üblicherweise als Signalisierungsinformationen, Signalisierungsdaten bzw. schlicht als Signalisierung bezeichnet. Der Begriff ist dabei weit zu verstehen. So sind z.B. auch die Nachrichten zur Steuerung von Registration, Admission und Status (RAS), die Nachrichten zur Steuerung von Nutzkanälen bestehender Gespräche (z.B. gemäß dem Standard H.245) sowie alle weiteren ähnlich ausgebildeten Nachrichten umfasst. Die "eigentlichen Informationen" werden zur Unterscheidung von der Signalisierung auch Nutzinformationen, Payload, Medieninformationen, Mediendaten oder schlicht Medien genannt. Kommunikationsbeziehungen, die zur Übermittlung der Signalisierung dienen, werden im weiteren auch als Signalisierungsverbindungen bezeichnet. Die zur Übermittlung der Nutzinformationen eingesetzten Kommunikationsbeziehungen werden z.B. Sprechverbindung, Nutzkanalverbindung oder - vereinfacht - Nutzkanal, Bearerchannel oder schlicht Bearer genannt.

In diesem Zusammenhang versteht man unter out-of-band bzw. outband die Übermittlung von Informationen auf einem anderen Weg / Medium als den im Kommunikationsnetz zur Übermittlung von Signalisierungs- und Nutzinformationen vorgesehenen. Insbesondere ist hiervon eine lokale Konfiguration von Einrichtungen vor Ort umfasst, die z.B. mit einer lokalen Steuereinrichtung vorgenommen wird. Demgegenüber werden bei in-band Informationen auf dem gleichen Weg / Medium, ggf. logisch getrennt von den betrachteten Signalisierungs- und Nutzinformationen, übermittelt.

Im Zuge der Konvergenz von Sprach- und Datennetzen werden Sprachübermittlungsdienste und zunehmend auch breitbandigere Dienste wie z.B. Übermittlung von Bewegtbildinformationen ebenfalls in paketorientierten Netzen realisiert, d.h. die Übermittlung der bisher üblicherweise leitungsorientiert übermittelten Echtzeitdienste erfolgt in einem konvergenten Netz - auch Sprach-Daten-Netz oder Multimedianetz genannt - paketorientiert, d.h. in Paketströmen. Diese werden auch Echtzeitpaketströme genannt. Die Übermittlung von Sprachinformationen über ein paketorientiertes IP Netz wird dabei auch mit 'VoIP' (Voice over IP) gekennzeichnet.

In den internationalen Standardisierungsgremien IETF (Internet Engineering Task Force) und ITU (International Telecommunications Union) mehrere verteilte Architekturen für Multimedianetze beschrieben, die zunächst von homogenen Multimedianetzen ausgehen.

Bei der ITU wird im dazu grundlegenden Standard H.323 der Transport von Sprache, Daten und Videoströmen über ein IP Netz definiert. Audio- und Videoströme werden dabei gemäß dem Protokoll RTP/RTCP übermittelt. Die Connection Control wird u.a. durch das Protokoll H.225 bewirkt, das die Signalisierung, Registrierung und die Synchronisation von Medienströmen ermöglicht. Die H.323 Architektur sieht vornehmlich folgende Typen von Funktionseinheiten vor:
- Endgerät, z.B. ein Terminal in einem Local Area Network (LAN), zur bi-direktionalen Echtzeit-Kommunikation mit anderen Endgeräten,
- Gatekeeper zur Durchführung der Connection Control,
- Media Gateway (MG) an der Schnittstelle zu anderen Netzen zur Konvertierung von H.323 Formaten in die Formate dieser Netze,
- Media Gateway Controller (MGC) zu Steuerung von Media Gateways, insbesondere deren jeweils übermittelten Verbindungen, mit Hilfe des Protokolls H.248 sowie zur Konvertierung zwischen unterschiedlichen Signalisierungsprotokollen.

Bei der IETF wird im Session Initiation Protocoll (SIP) die Telephonie über das Internet genormt, womit interaktive Verbindungen über das Internet bereitgestellt werden können. SIP unterstützt die Steuerung von Verbindungen und die Übersetzung von SIP Adressen in IP Adressen. SIP basiert auf vergleichsweise intelligenten Endpunkten, von denen viele Signalisierungsfunktion selbst durchgeführt. Wenn eine Connection mit Hilfe von SIP aufgebaut wird, so wird zwischen den beiden Seiten der Verbindung üblicherweise eine Beschreibung des Bearers ausgetauscht. Dazu wird das Session Description Protocol (SDP) nach dem Standard RFC2327 eingesetzt. Dieser Einsatz ist u.a. im Standard RFC3264: "An Offer/Answer Model with the Session Description Protocol (SDP)" beschrieben. Wichtig sind dabei vor allem folgende Bearer Daten:
- IP Adresse der Bearer Connection
- RTP/UDP Port der Bearer Connection (je nachdem, ob eine Sprach- oder Datenübertragung vorliegt)
- Codec(s), die für die Sprach bzw. Datenübertragung benützt werden (können)
- Streammode der Bearer Connection

Bei einem Connection Setup kann ein SIP Proxy Server zum Einsatz kommen, z.B. wenn sich die in Verbindung stehenden Endpunkte nicht kennen. Er kann auch dafür ausgelegt sein, einen empfangenen Request für einen Client (z.B. ein IP Telefon, einen PC oder ein PDA) zu bewerten, zu ändern und/oder weiterzugeben. An der Schnittstelle zu anderen Netzen sind ebenfalls MG und MGC vorgesehen. Zur Steuerung der MG wird das Protokoll MGCP (Media Gateway Control Protokoll) genutzt.

Beiden Architekturen ist gemeinsam, dass die Connection Control Ebene und die Resource Control Ebene funktional deutlich voneinander getrennt sind und meist sogar auf unterschiedlichen Hardware Plattformen realisiert werden.

Die Connection Control Ebene dient der geregelten Aktivierung und Deaktivierung von Netzdiensten. Sie kann dazu dedizierte Connection Controller umfassen, denen folgende Funktionen zugeordnet sein können:
- Address Translation: Umsetzung von E.164 Telephonnummern und anderen Alias Adressen (z.B. Rechnernamen) auf Transportadressen (z.B. internetadressen).
- Admission Control: Prüfung, ob und/oder in welchem Umfang eine Nutzung des Kommunikationsnetzes zulässig ist.
- Alias Address Modification: Rückgabe einer modifizierten Alias Adresse, die von Endpunkten z.B. zum Verbindungsaufbau verwendet werden.
- Bandwidth Control: Verwaltung von Übermittlungskapazitäten, z.B. durch Steuerung der zulässigen Anzahl von Einrichtungen, die gleichzeitig das Kommunikationsnetz nutzen dürfen.
- Connection Authorization: Zulässigkeitsprüfung für eingehende und ausgehende Verbindungswünsche.
- Connection Control Signalling: Vermittlung und/oder Verarbeitung von Signalisierungsnachrichten.
- Connection Management: Verwaltung von bestehenden Verbindungen.
- Dialed Digit Translation: Übersetzung der gewählten Ziffern in eine E.164 Telephonnummer oder eine Nummer aus einem privaten Nummerierungsschema.
- Zone Management: Registrierung von (z.B. VoIP fähigen) Einrichtungen und Bereitstellung obiger Funktionen für alle beim Connection Controller registrierten Einrichtungen.

Die Resource Control Ebene dient der geregelten Durchführung aktivierter Dienste. Zur Steuerung der Netzresourcen (z.B. Übermittlungsknoten) kann sie Resource Controller umfassen, denen folgende Funktionen zugeordnet sein können:
- Capacity Control: Steuerung des dem Kommunikationsnetz zugeführten Verkehrsvolumens, z.B. durch Kontrolle und ggf. Begrenzung der zulässigen Übermittlungskapazität einzelner Paketströme.
- Policy Activation: Reservierung von (Übermittlungs-) Resourcen im Kommunikationsnetz.
- Priority Management: Bevorzugte Übermittlung von prioren Verkehrsströmen, z.B. mit Hilfe von Prioritätskennzeichen, die in prioren Paketen vorgesehen werden.

Beispiele für Connection Controller stellen der von der ITU in der H.323 Gatekeeper oder der SIP Proxy dar. Wird ein größeres Kommunikationsnetz in mehrere Domänen - auch 'Zonen' genannt - gegliedert, kann in jeder Domäne ein separater Connection Controller vorgesehen werden. Eine Domäne kann auch ohne einen Connection Controller betrieben werden. Sind mehrere Connection Controller in einer Domäne vorgesehen, soll nur ein einziger von diesen aktiviert sein. Ein Connection Controller ist aus logischer Sicht getrennt von den Einrichtungen zu sehen. Physikalisch muss er jedoch nicht in einer separaten Connection Controller Einrichtung realisiert sein, sondern kann auch in jedem Endpunkt einer Verbindung (beispielsweise ausgebildet als H.323 oder SIP Endgerät, Media Gateway, Multipoint Control Unit) oder auch einer primär zur programmgesteuerten Datenverarbeitung ausgebildeten Einrichtung (beispielsweise: Rechner, PC, Server) vorgesehen werden. Auch eine physikalisch verteilte Realisierung ist möglich.

Ein alternatives Beispiel für einen Connection Controller ist ein Media Gateway Controller, dem üblicherweise die optionalen Funktionen Connection Control Signalling and Connection Management zugeordnet werden. Weiterhin ist die Zuordnung einer Funktion Signalling Conversion zur Umsetzung unterschiedlicher (Signalisierung-) Protokolle denkbar, was z.B. an der Grenze von zwei unterschiedlichen Netzen, die zu einem hybriden Netz zusammengeschlossen sind, erforderlich sein kann.

Der Resource Controller wird auch als 'Policy Decision Point (PDP)' bezeichnet. Er ist beispielsweise innerhalb von sog. Edge Routern - auch Edge Device, Zugangsknoten oder bei Zuordnung zu einem Internet Service Provider (ISP) auch Provider Edge Router (PER) genannt - realisiert. Diese Edge Router können auch als Media Gateway zu anderen Netzen ausgebildet sein, mit denen die Multimedianetze verbunden werden. Diese Media Gateway sind dann sowohl mit einem Multimedianetz als mit den anderen Netzen verbunden und dienen intern der Umsetzung zwischen den unterschiedlichen (Übermittlungs-) Protokollen der verschiedenen Netze. Der Resource Controller kann auch nur als Proxy ausgebildet sein und Resource Controller relevante Informationen an eine separate Einrichtung weiterleiten, auf der die relevanten Informationen entsprechend einer Funktion des Resource Controllers bearbeitet werden.

Der Austausch von Signalisierungsnachrichten erfolgt in diesen Netzen entweder unter Vermittlung eines Connection Controllers (Call Controller Routed Signalling - CCRS) oder direkt zwischen den Endgeräten (Direct Endpoint Routed Signalling - DERS). Es kann je Connection für jedes Endgerät und für jede Übertragungsrichtung individuell festgelegt werden, welche Variante zum Einsatz kommt.

Beim CCRS werden alle Signalisierungsnachrichten von zumindest einem Call Controller übermittelt. Alle Einrichtungen schicken und erhalten Signalisierungsnachrichten nur über den Call Controller. Ein direkter Austausch von Signalisierungsnachrichten zwischen den Einrichtungen ist dabei untersagt.

Beim DERS können Kopien ausgewählter Signalisierungsnachrichten an Connection Controller übermittelt werden, so dass ein Connection Controller auch bei dieser Variante Kenntnis von den zwischen den Endgeräten bestehenden Verbindungen haben kann. Diese Verbindungen werden jedoch von ihm selbst nicht aktiv beeinflusst oder verifiziert.

Zusammenfassend kann der Function Split zwischen den beiden Ebenen so beschrieben werden, dass der Resource Control Ebene lediglich die Funktionen zugeordnet sind, die zur Übermittlung von Nutzinformationen erforderlich sind, während von der Connection Control Ebene die Intelligenz zur Steuerung der Resource Control Ebene umfasst ist. Mit anderen Worten: Die Einrichtungen der Resource Control Ebene besitzen möglichst wenig Netzsteuerungsintelligenz und können in der Folge wirtschaftlich besonders vorteilhaft auf separaten Hardware Plattformen realisiert werden. Dies ist wegen der im Vergleich zu Connection Control Ebene höheren Installationszahlen in dieser Ebene ein besonders schöner Vorteil.

Durch Zusammenschluss von unterschiedlichen Netzen entstehen hybride Netze, in denen unterschiedliche Protokolle zum Einsatz kommen. Damit im einem derartigen Netz alle Geräte uneingeschränkt miteinander kommunizieren können (z.B. IP basierte Telephone mit PSTN kompatiblen und umgekehrt), ist ein Interworking zwischen den jeweiligen Protokollen (z.B. SIP und H.323 in paketorientierten Multimedianetzen bzw. ISUP und DSS1 in leitungsorientierten PSTN Netzen) erforderlich. Dieses Interworking ist weit zu versetzen und umfasst neben dem reinen Interworking der Bearer auch das Interworking von Leistungsmerkmalen bzw. Services wie Call Hold, Call Waiting (Anklopfen), Call Redirect (Rufweiterleitung), etc.

Das Interworking zwischen zwei unterschiedlichen Protokollen kann mittelbar oder unmittelbar bewirkt werden. Beim mittelbaren Interworking wird ein weiteres, drittes Protokoll zwischen die beiden Protokolle geschaltet - z.B. das Protokoll BICC (Bearer Independent Call Control) gemäß dem Standard Q.1902 oder das Protokoll SIP_T (SIP for Telephones), das im Standard RFC3372 beschrieben ist. Das unmittelbare Interworking erfolgt hingegen direkt zwischen den beiden unterschiedlichen Protokollen, d.h. ohne Einsatz eines Zwischenprotokolls.

Sowohl in konvergenten Multimedianetzen als auch in hybriden Netzen, die z.B. durch einen Zusammenschluss eines konvergenten Multimedianetzes mit einem konventionellen leitungsorientierten Sprachnetz gebildet werden, entstehen bei der Übermittlung von Informationen - insbesondere der in Echtzeitpaketströmen - neue technische Problemstellungen aufgrund der neuen bzw. unterschiedlichen Technologien, die in den jeweiligen Netztypen zum Einsatz kommen.

Ein anderes Beispiel ist aus WO 02/089415 bekannt.

Es ist Aufgabe der Erfindung, zumindest eines dieser Probleme zu erkennen und durch Angabe von zumindest einer Lösung den Stand der Technik zu bereichern.

Die Erfindung geht von der Erkenntnis aus, dass die CCRS Technologie in Endgeräten von Multimedianetzen wesentlich einfacher zu konfigurieren ist als die DERS Technologie. Beim CCRS muss in einem Endgerät lediglich die Adresse eines Connection Controllers eingetragen werden. Diese Adresse ist meist bereits zum Zeitpunkt der Erstinstallation bekannt. Beim DERS muss hingegen sichergestellt werden, dass im Endgerät die Adresse jedes Endgeräts vorliegt, zu dem eine per DERS gesteuerte Verbindung aufgebaut werden soll. Dies mag in sehr kleinen, homogenen Local Area Networks (LAN) realisierbar sein. In großen Wide Area Networks (WAN) stellt dies jedoch ein erhebliches Problem dar wegen der großen Anzahl von Endgeräten, die an solche Netze angeschlossen sind.

Weiterhin wird die Erfindung von der Erkenntnis getragen, dass während der Evolution von hybriden Netzen, die durch die Zusammenschaltung von bewährten leitungsorientierten Netzen mit modernen Multimedianetzen entstehen, viele der in den leitungsorientierten Netzen seit langem etablierten Leistungsmerkmale nicht oder zumindest nicht vollständig unterstützt werden. Eine Ursache hierfür liegt in der großen Anzahl von neuen Interworking Schnittstellen und Protokollen, von denen die bisherigen Leistungsmerkmale noch nicht bzw. nicht vollständig unterstützt werden.

Für multimediale Videotelephonie ergibt sich dabei ein besonderes Problem wegen der damit einhergehenden kombinierten Übermittlung von Sprach- und Bildinformationen, die nach herrschender Meinung miteinander und insbesondere im selben Netztyp übermittelt werden müssen.

Einerseits sind Multimedianetze nach Ansicht der Erfindung für die Übermittlung von Bildinformationen besser geeignet. Würde man nun auch die Sprachinformationen vollständig in Multimedianetzen übermitteln, dann geht zumindest ein Teil der bisherigen PSTN Leistungmerkmale verloren (z.B. keine Telephone ins PSTN, kein Call Waiting, kein Call Redirect, keine Intelligent Network Services).

Andererseits könnte man die Sprachinformationen in den bisherigen leitungsorientierten Netzen übermitteln. Dann sollte aber auch die Bildinformation in diesen Netzen übermittelt werden. Diese Netze sind aber auf die Übermittlung von Bildinformationen schlecht ausgelegt (z.B. wird passt die üblicherweise schwankende Übermittlungsrate von Bildinformation nicht zu deren festen Vergabe von Übermittlungskapazitäten). Zudem ist deren Signalisierung oft nicht auf die Steuerung der kombinierten Übermittlung von Sprach- und Bildinformationen ausgelegt.

Eine Lösung für diese der Erfindung zugrunde liegende Problemsituation ist in den Patentansprüchen angegeben.

Mit dieser Lösung sind eine Vielzahl von Vorteilen verbunden:
- Durch die Übermittlung mit zwei unterschiedlichen Signalisierungsmodellen löst sich die Erfindung von dem Gedanken, dass Sprach- und Bildinformationen immer miteinander übermittelt werden müssen. Durch diese Entkopplung wird die Voraussetzung geschaffen, die Übermittlung der Sprachinformationen durch eine PSTN basierte, leistungsmerkmalreiche Signalisierung und die Übermittlung der Bildinformationen durch eine multimediale, flexible Signalisierung zu steuern.
- Bei Steuerung der CCRS Verbindung durch eine Kombination des PSTN Protokolls BICC und des multimedialen Protokolls H.225 ergibt sich der besonders schöne Vorteil, dass infolge des bereits sehr vollständig definierten Interworkings zwischen diesen beiden Protokollen weitgehend alle bisherigen PSTN Leistungsmerkmale auch im H.323 Endpunkt zur Verfügung stehen.

Weitere vorteilhafte Ausgestaltungen der Erfindung ergeben sich aus den unter- oder nebengeordneten Ansprüchen.

Durch Mitteilung der Adresse des Partners an einer DERS Verbindung mit Hilfe der CCRS wird das Problem gelöst, wie diese Adresse in einem großen WAN von einem Endpunkt ermittelt werden kann. Durch Rückgriff auf die CCRS bleibt die Konfiguration des Endgeräts weiterhin einfach. Es können dennoch komplexe DERS Verbindungen aufgebaut werden.

Für die Übermittlung der Adresse mit Hilfe eines mittelbaren Protokolls ist lediglich ein einziges Protokollelement erforderlich. Sofern dieses Protokollelement in diesem Protokoll noch nicht vorgesehen ist, wird der Aufwand für die Erweiterung des Protokolls dadurch vorteilhaft minimiert.

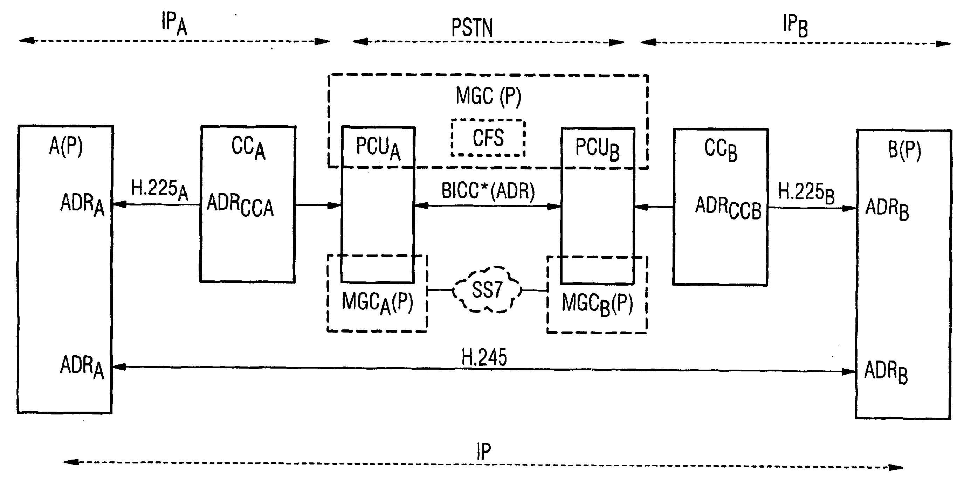

Die Erfindung wird im folgenden anhand von weiteren Ausführungsbeispielen, die auch in der Figur dargestellt sind, erläutert.

In der Figur ist die Erfindung durch eine beispielhafte Anordnung zur Durchführung des erfindungsgemäßen Verfahrens ausgeführt, die mehreren Funktionseinheiten und Protokolle zu deren Zusammenschaltung umfasst. Zwischen zwei Endpunkte A, B sind dabei zwei Verbindungen eingerichtet. Zur Steuerung der ersten Verbindung sind die Endpunkte A, B jeweils über einen ihnen zugeordneten Connection Controller CC_{A}, CC_{B} mit Hilfe von Protokollen H.225_{A}, H.225_{B} mit Interworkingeinheiten PCU_{A}, PCU_{B} eines leitungsorientierten Netzes PSTN, zwischen denen ein erfindungsgemäß erweitertes Protokoll BICC* (ADR) zum Ablauf kommt, mittelbar verbunden. Zur Steuerung der zweiten Verbindung sind die beiden Endpunkte unmittelbar durch ein Protokoll H.245 verbunden.

Von den Endpunkten A, B werden H.225 Nachrichten gemäß der CCRS Technologie an die Adresse ADR_{CCA}, ADR_{CCB} ihres jeweiligen Connection Controllers CC_{A}, CC_{B} und H.245 Nachrichten gemäß der DERS Technologie an die Adresse ADR_{A}, ADR_{B} ihres jeweils gegenüberliegenden Endpunktes A, B gesendet.

Die Interworkingeinheiten PCU sind entweder in separaten Media Gateway Controller Einrichtungen MGC_{A}, MGC_{B} - verbunden über ein Signalisierungsnetz SS7 - oder in einer gemeinsamen Controller Einrichtung MGC - verbunden über einen Controller Core CFS - zugeordnet und als solche Teil eines leitungsorientierten Netzes PSTN. Alle anderen Funktionseinheiten sind zumindest einem paketorientierten Netz IP zugeordnet. Für den einschlägigen Fachmann ist dabei offensichtlich, dass die Erfindung selbstverständlich in beliebigen paketorientierten Netzen zum Einsatz kommen kann wie z.B. Intranet, Extranet, einem lokalen Netz (Local Area Network - LAN) oder einem, z.B. als Virtuelles Privates Netz (VPN) ausgebildeten firmeninternen Netz (Corporate Network).

Es sei betont, dass die derart aufgezeigten Ausführungen der Erfindung trotz ihrer teilweise sehr detailgetreuen Darstellung von konkreten Netzszenarien lediglich beispielhafter Natur und nicht einschränkend zu verstehen sind. Dem Fachmann ist klar, dass die Erfindung bei allen denkbaren Netzkonfigurationen, insbesondere anderen Interworking Szenarien funktioniert. Insbesondere können die H.323 Protokoll durch SIP Protokoll und das Protokoll BICC* durch das Protokoll SIP_T oder andere wirkungsgleiche Protokolle ersetzt werden.

Im folgenden wird ein Ausführungsbeispiel der Erfindung erläutert, bei dem die Interworkingeinheiten PCU einer gemeinsamen Controller Einrichtung MGC zugeordnet und über einen Controller Core CFS miteinander verbunden sind. Bei dieser Ausführung werden von den einzelnen Funktionseinheiten folgende Wirkungen hervorgerufen (dabei gilt für den Index x jeweils x ∈ {A, B}) :
- Endgeräte A, B: Terminierung der H.225 Signalisierung, zu deren Austausch im CCRS Mode die Adresse ADR_{CCx} des zugeordneten Connection Controllers CCₓ verwendet wird und Terminierung der H.245 Signalisierung, zu deren Austausch im DERS Mode die Adresse ADRₓ desjenigen Endgerätes A, B verwendet wird, an das Informationen übermittelt werden sollen.
- Connection Controller CCₓ: Von diesem werden im wesentlichen die H.225 Signalisierung zwischen den Endgeräten A, B und den Interworkingeinheiten PCUₓ geroutet.
- Interworkingeinheit PCUₓ: Hier wird die H.225 Signalisierung der Endgeräte A, B in das Protokoll BICC* umgewandelt und umgekehrt.
- Controller Core CFS: Hier werden die klassischen Callprocessing Funktionen zur Implementierung der bewährten, leitungsorientierten Leistungsmerkmale und Services durchgeführt.

Zur Übermittlung von Sprach- und Bildinformationen, die für eine Implementierung von Videotelephonie erforderlich ist, verfügen die Endgeräte A, B über die Möglichkeit, nach abgeschlossenem Aufbau einer ersten Verbindung, die mit Hilfe des Protokolls H.225 im CCRS Mode - d.h. unter Vermittlung durch die Connection Controller CC - gesteuert wird, zur Übermittlung der Sprachinformationen eine zweite Verbindung einzurichten, die mit Hilfe des Protokolls H.245 gesteuert wird.

Nach üblichem Stand der Technik wäre im Anschluss daran auch die zur Übermittlung der Bildinformationen erforderliche H.245 Signalisierung zwischen den zugeordneten Endpunkten der H.225 Signalisierung einzurichten und auszutauschen, also zwischen den Endgeräten A, B und der jeweils zugeordneten PCUₓ. Erfindungsgemäß wird von diesem Standardablauf abgewichen und stattdessen die H.245 Signalisierung direkt zwischen den Endgeräten A, B im DERS Mode - d.h unter Umgehung der Connection Controller CC und der Controller Einrichtungen MGC - ausgetauscht.

Entsprechend einer bevorzugten Ausgestaltung der Erfindung wird die dazu erforderliche Mitteilung der H.245 Adresse ADRₓ zwischen den Endgeräten A, B mit Hilfe der H.225 Signalisierung der ersten Verbindung mitgeteilt.

Beispielsweise ist dazu in dem Protokoll BICC* ein entsprechendes Protokollelement, z.B. einen Parameter, zur Übermittlung der Adresse ADR vorgesehen und von der Interworkingeinheit PCU eine Mapping dieses Protokollelements auf das Protokoll H.225 unterstützt. In den Connection Controllern CC und dem Controller Core CFS bzw. dem Signalisierungsnetz SS7 muss hingegen keine spezielle Funktionalität implementiert werden. Dies hat den Vorteil, dass mit vergleichsweise geringfügigen Erweiterungen der Software P nur einer einzigen Baugruppe PCU Videotelephonie zwischen H.323 Endgeräten ermöglicht werden kann, ohne dass damit Einschränkungen der bestehenden leitungsorientierten Features des Netzes PSTN auftreten. Insbesondere Netzübergänge zum Netz PSTN, zu VoDSL (Voice over DSL) oder SIP Anschlüssen sind wie bisher möglich.

Damit wird es den Endgeräten A, B ermöglicht - nach dem durch die Connection Controller CC und die Controller Einrichtung MGC vermittelten Aufbau einer Sprachverbindung - zusätzliche Videokanäle zuzuschalten und so Multimedia Videotelephonie zu implementieren, ohne auf die bisherigen Leistungsmerkmale verzichten zu müssen.

Dem Fachmann ist klar, dass die Erfindung bei allen denkbaren Netzkonfigurationen, insbesondere allen Interworking Szenarien wie TDM ⇔ IP oder TDM ⇔ Access Gateway funktioniert. Weiterhin ist dem Fachmann klar, dass die Erfindung bei bi-direktionalen Verbindungen natürlich ohne weiteres in beiden Übermittlungsrichtungen zum Einsatz kommen kann.

Abschließend sei darauf hingewiesen, dass die Beschreibung der für die Erfindung relevanten Komponenten des Kommunikationsnetzes grundsätzlich nicht einschränkend zu verstehen ist. Für einen einschlägigen Fachmann ist insbesondere offensichtlich, dass Begriffe wie Applikation, Client, Server, Gateway, Controller, etc... funktional und nicht physikalisch zu verstehen sind. Alle Funktionseinheiten können insbesondere teilweise oder vollständig in Software / Computerprogrammprodukten P und/oder über mehrere physikalische Einrichtungen verteilt realisiert werden.

## Patentansprüche

1. Verfahren zur Übermittlung von Informationen zwischen zumindest zwei Endpunkten (A, B) zumindest eines Kommunikationsnetzes mit folgenden Schritten:
- Einrichten zumindest einer ersten Verbindung zwischen den Endpunkten, die durch ein Connection Controller Routed Signalling (H.225_{A}, BICC*, H.225_{B}) gesteuert wird,
- Einrichten zumindest einer zweiten Verbindung zwischen den Endpunkten, die durch ein Direct Endpoint Routed Signalling (H.245) gesteuert wird,
- Übermitteln der Informationen entlang der ersten und/oder der zweiten Verbindung.

2. Verfahren nach Anspruch 1,
bei dem entlang der ersten Verbindung Sprachinformationen übermittelt werden.

3. Verfahren nach einem der vorstehenden Ansprüche,
bei dem entlang der zweiten Verbindung Bildinformationen übermittelt werden.

4. Verfahren nach einem der vorstehenden Ansprüche,
bei dem die erste Verbindung vor der zweiten Verbindung eingerichtet wird.

5. Verfahren nach einem der vorstehenden Ansprüche,
bei dem zumindest einem der beiden Endpunkte eine zum Aufbau der zweiten Verbindung erforderliche Adresse (ADR) des anderen Endpunktes mit Hilfe des Connection Controller Routed Signalling der ersten Verbindung mitgeteilt wird, insbesondere von dem anderen Endpunkt ausgeht.

6. Verfahren nach dem vorstehenden Anspruch,
bei dem die Adresse zumindest teilweise gemäß einem Protokoll (BICC*) übermittelt wird, das von keinem der beiden Endpunkte unterstützt wird.

7. Verfahren nach dem vorstehenden Anspruch,
bei dem in diesem Protokoll ein spezielles Protokollelement zur Übermittlung der Adresse vorgesehen wird.

8. Computerprogrammprodukt (P), umfassend Softwarecodeabschnitte, mit denen ein Verfahren nach einem der vorstehenden Verfahrensansprüche durch zumindest einen Prozessor ausgeführt wird.

9. Vorrichtung - insbesondere Controller Einrichtung (MGC) oder Endpunkt (A, B, PCU) einer Informationsübermittlung - umfassend Mittel zur Durchführung eines Verfahrens nach einem der vorstehenden Verfahrensansprüche.

10. Anordnung - insbesondere paketorientiertes, integriertes Multimedianetz (IP) oder hybrides Netz (IP, PSTN) - umfassend Computerprogrammprodukte und/oder Vorrichtungen zur Durchführung eines Verfahrens nach einem der vorstehenden Verfahrensansprüche.

## Claims

1. Method for transmitting information between at least two end points (A, B) of at least one communication network with the following steps:
- Setting up at least a first connection between the end points that are controlled via a connection controller routed signalling (H.225_{A}, BICC*, H.225_{B}),
- Setting up at least a second connection between the end points that are controlled by a direct end point routed signalling (H.245),
- Transmitting the information along the first and/or the second connection.

2. Method according to claim 1,
whereby voice information is transmitted along the first connection.

3. Method according to one of the preceding claims,
whereby voice information is transmitted along the second connection.

4. Method according to one of the preceding claims,
whereby the first connection is set up before the second connection.

5. Method according to one of the preceding claims,
whereby at least one address (ADR) of the other end point required for setting up the second connection is transmitted to one of the two end points by using the connection controller routed signalling of the first connection, in particular originating from the other end point.

6. Method according to the preceding claim,
whereby the address is at least partially transmitted according to a protocol (BICC*) that is not supported by either of the two end points.

7. Method according to the preceding claim,
whereby in this protocol, a special protocol element for transmitting the address is provided.

8. Computer program product (P), including software code sections by means of which a method is carried out by at least one processor according to one of the preceding claims.

9. Device - particularly controller device (MGC) or the end point (A, B, PCU) of an information transmission - including means for carrying out a method according to one of the preceding claims.

10. Arrangement - particularly packet-oriented, integrated multimedia network (IP) or hybrid network (IP, PSTN) - including computer program products and/or devices for carrying out a method according to one of the preceding claims.

## Revendications

1. Procédé pour la transmission d'informations entre au moins deux points terminaux (A, B) d'au moins un réseau de communication, comprenant les étapes suivantes :
- configuration d'au moins une première connexion entre les points terminaux, qui est commandée par un Connection Controller Routed Signalling (H.225_{A}, BICC*, H.225_{B}),
- configuration d'au moins une deuxième connexion entre les points terminaux, qui est commandée par un Direct Endpoint Routed Signalling (H.245),
- transmission des informations le long de la première et/ou de la deuxième connexion.

2. Procédé selon la revendication 1,
dans lequel des informations vocales sont transmises le long de la première connexion.

3. Procédé selon l'une quelconque des revendications précédentes,
dans lequel des informations d'image sont transmises le long de la deuxième connexion.

4. Procédé selon l'une quelconque des revendications précédentes,
dans lequel la première connexion est configurée avant la deuxième connexion.

5. Procédé selon l'une quelconque des revendications précédentes,
dans lequel est communiquée à au moins un des deux points terminaux une adresse (ADR) de l'autre point terminal, nécessaire pour l'établissement de la deuxième connexion, à l'aide du Connection Controller Routed Signalling de la première connexion, notamment part de l'autre point terminal.

6. Procédé selon la revendication précédente,
dans lequel l'adresse est transmise, tout du moins en partie, selon un protocole (BICC*) qui n'est supporté par aucun des deux points terminaux.

7. Procédé selon la revendication précédente,
dans lequel un élément de protocole spécial est prévu dans ce protocole pour la transmission de l'adresse.

8. Produit de programme d'ordinateur (P), comprenant des sections de code de logiciel, au moyen desquelles un procédé selon l'une des revendications précédentes est exécuté par au moins un processeur.

9. Dispositif - notamment dispositif contrôleur (MGC) ou point terminal (A, B, PCU) d'une transmission d'information - comprenant des moyens pour la réalisation d'un procédé selon l'une quelconque des revendications précédentes.

10. Agencement - notamment réseau multimédia (IP) intégré, orienté paquets ou réseau hybride (IP, PSTN) - comprenant des produits de programmes d'ordinateur et/ou des dispositifs pour la réalisation d'un procédé selon l'une quelconque des revendications précédentes.
